# DEMANDE DE BREVET EUROPEEN

(11) **EP 0 600 812 A1**
(43) Date de publication de la demande: **08.06.1994**
(21) Numéro de dépôt: 93420479.3
(22) Date de dépôt: 03.12.1993
(51) Int. Cl.: B25G 3/34, A47J 43/10, B29C 33/12

(54) **Manche de fouet culinaire et son procédé de fabrication**

(30) Priorité: 03.12.1992 FR 9214868
(71) Demandeur: ETABLISSEMENTS SAINT-ROMAIN ET CIE, Société Anonyme dite:, F-42000 Saint Etienne (FR)
(72) Inventeur: Saint-Romain, André, F-42480 La Fouillouse (FR)
(74) Mandataire: Perrier, Jean-Pierre

(57) **Abrégé**

Ce manche est composé d'un manche surmoulé et de boucles de fils métalliques dont les extrémités des branches sont positionnées par un noyau axial (6) solidaire du manche.

Selon l'invention, le noyau axial (6) est emmanché à l'une des extrémités d'une armature tubulaire (5) dont l'autre extrémité comporte un bouchon (14) comportant des tenons radiaux (17) pour le positionnement de l'armature (5) dans le moule de surmoulage, ce bouchon (14) étant réalisé dans la même matière synthétique que celle composant la couche de surmoulage enveloppant l'armature tubulaire (5) et ses deux extrémités.

## Description

L'invention concerne le domaine des fouets culinaires composés de plusieurs boucles de fils métalliques dont les extrémités des branches sont solidaires d'un manche.

Elle concerne plus particulièrement les fouets dans lesquels les extrémités des branches sont positionnées sur un noyau central, emmanché et coincé dans un fourreau tubulaire formant le manche, et sont munies de retours coudés vers l'intérieur aptes à s'accrocher dans des trous radiaux du noyau pour assurer le calage de ses boucles.

Ce mode de liaison entre les boucles du fouet et le manche est simple, efficace et de montage aisé, mais il présente l'inconvénient de former, entre les divers composants du fouet, des espaces divers pouvant recueillir de la pâte, de la crême ou tout autre produit alimentaire fouetté, c'est à dire de former des foyers contaminants, difficilement nettoyables par un lessivage normal.

Pour remédier à cet inconvénient, il a été envisagé d'envelopper l'armature du manche d'une couche de matière synthétique, surmoulée sur lui et s'insérant entre les fils formant les boucles, dans la zone où ces fils sortent du manche.

Cette opération de surmoulage est réalisée en disposant l'armature du manche dans un moule en au moins deux parties et portant des broches s'insérant entre les fils des boucles pour former une paroi étanche permettant le surmoulage des fils à la sortie du manche. Ces broches eclipsables assurent le positionnement dans le moule de l'extrémité correspondante de l'armature.

Dans ces conditions, lorsque la pression d'injection dans l'empreinte de la matière synthétique de surmoulage est élevée ou, plus simplement, lorsque son cheminement dans l'empreinte de part et d'autre de l'armature provoque des variations de pression localisée, l'armature est soumise à des déséquilibres favorisant son pivotement dans l'empreinte et conduisant à un manche surmoulé défectueux, car alors l'armature affleure de la face extérieure de ce manche.

Pour remédier à cet inconvénient, on peut avoir recours à des broches eclipsables radialement qui, après fermeture du moule, viennent en contact avec l'armature du manche pour la caler et éviter son pivotement lors de l'injection de la matière synthétique. Toutefois, cette technique ne peut pas être utilisée dans la présente application car elle formerait, dans le manche final, des puits débouchant du manche et pouvant constituer des foyers contaminants.

FR-A-2 646 765 décrit un manche dans lequel les extrémités des branches métalliques du fouet sont positionnées par un noyau axial, calées par soudure sur une bague métallique disposée entre elles et noyées directement dans la couche de surmoulage. Cette construction présente l'inconvénient de permettre aux extrémités des branches, sous un effort élevé communiqué au fouet, de casser la couche de surmoulage, mais aussi de consommer beaucoup de matière synthétique sans pour autant être certain que les extrémités des branches soient toutes parfaitement noyées dans le surmoulage.

US-A-3 374 503 décrit un procédé de surmoulage d'une canne de club de golf, consistant à coiffer l'extrémité libre de l'armature tubulaire de la canne par une douille métallique comportant des moyens radiaux d'appui contre la paroi de l'empreinte de surmoulage. Cette technique n'est pas directement transposable au manche de fouet, car après surmoulage, elle laisse dans le manche des moyens métalliques qui affleurent en surface et peuvent constituer des foyers contaminants.

La présente invention a pour but de fournir un manche de fouet, surmoulé de matière synthétique, remédiant aux inconvénients des manches ci-dessus et possédant la résistance recherchée, tout en nécessitant moins de matière synthétique et en ne présentant aucun foyer contaminant.

A cet effet, le noyau axial est emmanché à l'une des extrémités d'une armature tubulaire dont l'autre extrémité comporte un bouchon comportant des tenons radiaux pour le positionnement de l'armature dans le moule de surmoulage, ce bouchon étant réalisé dans la même matière synthétique que celle composant la couche de surmoulage enveloppant l'armature tubulaire et ses deux extrémités.

Ainsi, le manche présente une surface externe lisse l'enveloppant totalement et d'épaisseur uniforme puisque le bouchon positionne radialement l'armature lors du moulage. Par ailleurs, et grâce à l'identité de matière entre le bouchon et la couche de surmoulage, la liaison entre le bouchon et le surmoulage ne pose aucun problème, ne forme aucune cavité et permet d'obtenir un manche surmoulé présentant extérieurement une surface continue, très esthétique et facilement nettoyable.

L'invention concerne également le procédé de fabrication du manche, consistant :
- à positionner les extrémités des branches du fouet dans les logements du noyau axial,
- à insérer le noyau axial dans l'une des extrémités de l'armature tubulaire,
- à insérer le bouchon à l'autre extrémité de l'armature,
- à disposer l'ensemble obtenu dans l'empreinte du moule de formation de surmoulage,
- et, après fermeture de cette empreinte, à injecter la matière synthétique.

Cette pièce, peu onéreuse à réaliser, assure un excellent positionnement de l'armature dans le moule, et ne laisse apparaître, sur la surface du manche obtenu, que quelques points ayant chacun, en forme et surface, la section transversale d'un tenon. Un autre avantage de cette pièce est que, lorsque le manche est équipé d'un crochet de suspension surmoulé, ce crochet est parfaitement lié au reste du manche par la matière de surmoulage qui, passant entre les tenons de la pièce de positionnement, forme une structure monolithique avec l'enveloppe de surmoulage.

D'autres caractéristiques et avantages ressortiront de la description qui suit en référence au dessin schématique annexé, représentant à titre d'exemple non limitatif, un manche de fouet selon l'invention.
Figure 1 est une vue partielle de côté en coupe longitudinale montrant les composants de l'armature du manche,
Figure 2 est une vue de côté en coupe longitudinale montrant l'armature du manche lorsqu'elle est disposée dans l'empreinte d'un moule,
Figure 3 est une vue en coupe suivant III-III de figure 2,
Figure 4 est une vue partielle de côté montrant le manche obtenu.

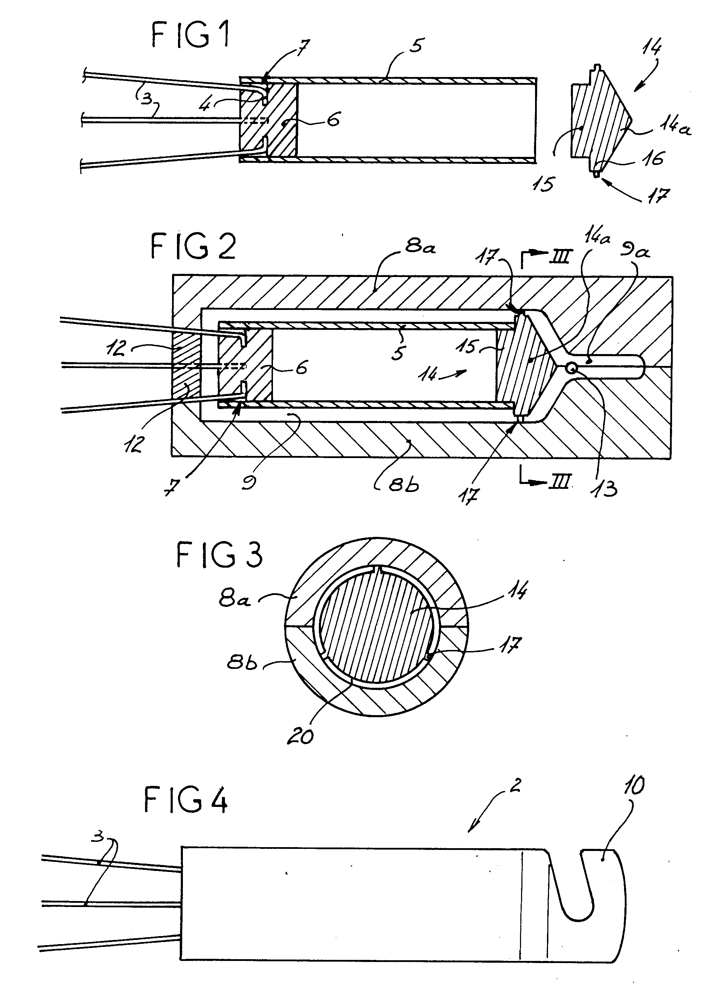

De façon connue, et comme montré à la figure 4, ce fouet culinaire est composé d'un manche, désigné par la référence générale 2, servant à la préhension mais aussi à la fixation des extrémités des branches 3 des boucles en fils métalliques constituant le fouet proprement dit.

Les figures 1 et 2 montrent que chaque branche 3 est munie d'un retour 4 coudé vers l'intérieur et apte à s'engager dans un puits de calage ménagé radialement dans un noyau 6 en matière synthétique. Ce dernier comporte des rainures longitudinales 7 communiquant avec les puits précités et servant au logement et au positionnement angulaire des extrémités des branches 3.

Après que les branches aient été montées sur le noyau 6, celui-ci est emmanché à l'une des extrémités d'une armature 5, réalisée de préférence en métal, et en particulier en acier inoxydable, mais pouvant aussi être en matière synthétique.

La figure 2 représente de manière schématique une forme d'exécution du moule mis en oeuvre pour surmouler sur l'armature 5, la couche de matière synthétique. Ce moule est composé de deux parties 8a-8b délimitant, entre elles une empreinte 9, ayant, de façon connue, les forme et dimensions du manche définitif, et comportant, par exemple, une partie 9a permettant l'obtention du crochet 10 montré à la figure 4. Ce moule comporte également dans la zone de passage des branches 3 du fouet, des broches amovibles 12 s'insérant entre les branches 3 pour obturer l'empreinte 9. Cette technique étant bien connue des fabricants de moules et des mouleurs, les broches 12 ne sont représentées ici de manière très schématique. Enfin, la référence 13 représente, de manière schématique, le point d'injection de la matière synthétique dans le moule.

Selon l'invention, avant que l'armature 5, déjà liée aux branches 3 du fouet par le noyau axial 6, soit mis en place dans l'empreinte du moule, elle est obturée par un bouchon 14 réalisé dans la même matière synthétique que celle assurant le surmoulage. Elle peut, par exemple, être réalisée en même temps que le surmoulage dans un moule à deux empreintes, et être emmanchée dans l'armature préparée pour le surmoulage suivant. Dans la forme d'exécution représentée, le bouchon 14 est composé d'un tenon cylindrique 15 apte à s'emmancher à l'intérieur de l'extrémité libre de l'armature tubulaire 5 et d'une partie épaulée 16, de section circulaire et de diamètre inférieur au diamètre final du manche. De cette partie circulaire 16, font saillies plusieurs tenons radiaux 17 et, par exemple, trois dans la forme d'exécution.

Grâce à cet agencement, lorsque l'ensemble armature 5 et bouchon 14 est mis en place dans l'empreinte 9 du moule, que le moule est fermé et que la matière synthétique pénètre dans l'empreinte 9 par le canal 13, toute réaction sur l'armature 5 tendant à déplacer son axe longitudinal par rapport à l'axe longitudinal de l'empreinte, par pivotement autour des branches 3 pincées dans le moule, est limitée par appui d'au moins l'un des tenons 17 contre la paroi correspondante de l'empreinte 9.

Il en résulte que, quelles que soient les variations de pression d'injection ou les variations de pression dans le moule, l'armature 5 est toujours parfaitement positionnée à l'intérieur de l'enveloppe surmoulée sur elle et que le surmoulage ne conduit à aucun rebut, ni à aucun foyer contaminant.

Un autre avantage inhérent à la structure particulière du bouchon 14 formant cale de positionnement, et en particulier aux canaux en forme de segment de couronne 20 formés entre les tenons 17, comme montré à la figure 3, est que la matière synthétique formant le surmoulage du manche est parfaitement liée à la matière synthétique formant le crochet 10. Il en résulte, qu'en cas de choc, le crochet ne risque pas de se casser dans une zone d'affaiblissement, comme ce serait le cas s'il était lié au surmoulage du corps par une plus grande zone de contact entre deux coulées successives.

Enfin, après démoulage, le manche surmoulé obtenu présente, vu de l'extérieur, une surface parfaitement uniforme et lisse, sans aspérité, ne laissant apparaître localement que la trace des tenons 17, et même que du tenon 17 ayant positionné l'armature pendant la coulée si l'épaisseur de la couche surmoulée tolère un certain débattement longitudinal de l'armature.

Il est évident que dans des variantes de réalisation, le bouchon 14 peut présenter toute autre section transversale, et comporter ou non un cône 14a de répartition de la matière et posséder plus de trois tenons 17.

## Revendications

1. Manche de fouet culinaire composé d'un manche surmoulé et de boucles de fils métalliques dont les extrémités des branches (3) sont positionnées par un noyau axial (6) solidaire du manche, **caractérisé en ce que** le noyau axial (6) est emmanché à l'une des extrémités d'une armature tubulaire (5) dont l'autre extrémité comporte un bouchon (14) comportant des tenons radiaux (17) pour le positionnement de l'armature (5) dans le moule de surmoulage, ce bouchon (14) étant réalisé dans la même matière synthétique que celle composant la couche de surmoulage enveloppant l'armature tubulaire (5) et ses deux extrémités.

2. Procédé de fabrication du fouet selon la revendication 1, **caractérisé en ce** **qu'**il consiste :
- à positionner les extrémités des branches (3) du fouet dans les logements (7) du noyau axial (6),
- à insérer le noyau axial (6) dans l'une des extrémités de l'armature tubulaire (5),
- à insérer le bouchon (14) à l'autre extrémité de l'armature (5),
- à disposer l'ensemble obtenu dans l'empreinte (9) d'un moule de formation du surmoulage,
- et, après fermeture de cette empreinte, à injecter la matière synthétique.

3. Moyen pour la mise en oeuvre du procédé selon la revendication 2, **caractérisé en ce qu'**il est constitué par un bouchon (14) en matière synthétique moulée, comportant un tenon cylindrique axial (15) apte à être emmanché dans l'une des extrémités de l'armature tubulaire (5) du manche et, au moins, trois tenons radiaux (17) saillant vers l'extérieur et aptes à venir en appui contre la paroi de cette empreinte, pour cintrer l'armature pendant l'injection.

4. Moyen selon la revendication 3, **caractérisé en ce que** le noyau comporte à l'opposé de son tenon (15) une partie conique de répartition de la matière dans la partie de l'empreinte formant un crochet.
